**Europäisches Patentamt**

**European Patent Office**

**Office européen des brevets**

(19)

(11) Veröffentlichungsnummer : **0 105 225 B1**

(12)

# EUROPÄISCHE PATENTSCHRIFT

(45) Veröffentlichungstag der Patentschrift : 25.03.87

(21) Anmeldenummer : 83108887.7

(22) Anmeldetag : 08.09.83

(51) Int. Cl.⁴ : **B 01 D 23/24, B 01 D 23/10**

(54) **Verfahren zum Reinigen eines Flüssigkeitsfilters und einer dieses enthaltenden Abscheideranlage.**

(30) Priorität : 08.09.82 DE 3233357

(43) Veröffentlichungstag der Anmeldung : **11.04.84 Patentblatt 84/15**

(45) Bekanntmachung des Hinweises auf die Patenterteilung : **25.03.87 Patentblatt 87/13**

(84) Benannte Vertragsstaaten : **AT CH DE FR IT LI NL**

(56) Entgegenhaltungen :
**CH-A- 363 328**
**DE-A- 2 629 897**
**US-E- 16 457**

(73) Patentinhaber : **Passavant-Werke AG & Co. KG D-6209 Aarbergen 7 (DE)**

(72) Erfinder : **Loseries, Hans Georg Louise-Seherstrasse 24 A D-6252 Diez (DE)**

(74) Vertreter : **Glawe, Delfs, Moll & Partner Patentanwälte Postfach 26 01 62 Liebherrstrasse 20 D-8000 München 26 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Reinigen eines Filters durch Rückspülen seiner Filterfüllung von unten nach oben mittels Spülflüssigkeit und Luft und anschließendes Abziehen der Spülflüssigkeit oberhalb der Filterfüllung, wobei zuerst während des Rückspülens ohne Abzug von Spülflüssigkeit die Zufuhr von Luft in einer Menge, die zur Erzeugung einer Turbulenz im Filter und zur Ablösung der angelagerten Schmutzteilchen führt, und die Zufuhr von Spülflüssigkeit in einer den beim Filtrationsbetrieb zugeführten Volumenstrom unterschreitenden Menge derart erfolgt, daß der freigesetzte Filterschlamm in eine über der Filterfüllung anstehende Schicht von Spülflüssigkeit ausgetragen wird, und wobei anschließend die oberhalb der Filterfüllung anstehende, den Filterschlamm enthaltende Flüssigkeitsschicht abgezogen wird.

Ein Verfahren dieser Art ist aus CH-A-363 328 bekannt. Ein ähnliches Verfahren ist ferner aus DE-AS-2 630 195 für das Reinigen eines Filters vorzugsweise für die Trinkwasseraufbereitung oder für die Reinigung von Schwimmbadwasser bekannt. Durch eine mindestens zweitweise unterschiedliche Steuerung der Strömungsgeschwindigkeit von Luft und Spülflüssigkeit soll bei diesem zweiten Verfahren zeitweise das körnige Filterbett in einen aufgewirbelten Zustand versetzt werden. Der Abzug der mit freigesetztem Filterschlamm beladenen Spülflüssigkeit erfolgt während der ganzen Dauer des Rückspülvorgangs.

Ein häufig auftretendes Problem ist das Reinigen von Filtern zum Abtrennen von Öl, Benzin od. dgl. Leichtflüssigkeit aus Wasser. Derartige Filter sind häufig in einer Abscheideranlage für Abwasser einem Schwerkraftabscheider als Nachreinigungsstufe nachgeschaltet. Die gesamte Abscheideranlage muß in regelmäßigen Intervallen einer Reinigung unterworfen werden, die außer dem Rückspülen des Filters auch das Entleeren des Abscheiderinhalts sowie den Abtransport der abgeschiedenen bzw. abgefilterten Verunreinigungen in einem speziellen Entsorgungsfahrzeug beinhaltet, welches sie zu einer Verbrennungsanlage oder Sonderdeponie befördert. Die Entsorgung dieser Anlagen ist vor allem wegen des Wassergehalts der Verunreinigungen sehr kostenintensiv. So kostet die Abfuhr eines Kubikmeters Abwasser aus Abscheideranlagen z. Zt. ca. DM 330,—, gleichgültig, wie hoch der Gehalt an wiedergewinnbaren Leichtflüssigkeiten ist. Die bisher bekannten Methoden für die Entleerung, Reinigung und Wiederinbetriebnahme solcher Abscheideranlagen erfordern bei jedem Reinigungs und Entleerungsvorgang eine sehr große Menge an Frischwasser, die entweder dem Trinkwassernetz entnommen oder vom Entsorgungsfahrzeug mitgebracht werden muß. Die entsprechend großen Mengen an abzutransportierender verschmutzter Flüssigkeit erfordern ein entsprechend großes Aufnahmevermögen des Entsorgungsfahrzeugs.

Der Erfindung liegt die Aufgabe zugrunde, ein Verfahren der genannten Art, insbesondere im Zusammenhang mit dem Entleeren, Reinigen und Entsorgen einer Abscheideranlage, so auszugestalten, daß die Menge der insgesamt aus der Anlage zu entfernenden, verschmutzten Flüssigkeit sowie die einzusetzende Frischwassermenge möglichst gering ist, ohne daß die Wirksamkeit der Reinigung beeinträchtigt wird.

Zur Lösung dieser Aufgabe ist bei einem Verfahren der eingangs genannten Art vorgesehen, daß beim Rückspülen eines Koaleszenzfilters mit einer Filterfüllung aus offenzelligem geschäumten Kunststoff die Luft und Spülflüssigkeit derart ungleichzeitig zugeführt werden, daß zuerst nur Luft zur Freisetzung der Schmutzteilchen in den Poren der Filterfüllung und anschliessend die Spülflüssigkeit mit oder ohne weitere Luftzufuhr, zum langsamen Austragen des Filterschlamms an die Flüssigkeitsoberfläche zugeführt wird.

Erfindungsgemäß werden somit Luft und Spülflüssigkeit ungleichzeitig zugeführt, so daß ein zweiphasiger Rückspülvorgang entsteht, wobei in der ersten Phase die Luft die Freisetzung der Verunreinigung in den Poren bewirkt und in der zweiten Phase die Flüssigkeit die so freigesetzten Verunreinigungen in einem langsamen Flotationsvorgang nach oben fördert.

Die Luftblasen haben hierbei im wesentlichen nur die Aufgabe, den Filterschlamm von den Poren der Filterfüllung abzulösen und in Schwebe zu halten. Das nachfolgende Spülwasser drückt den Filterschlamm praktisch in Form einer Pfropfenströmung und ohne ihn zu verdünnen, an die Oberfläche. Die gegebenenfalls hierbei noch eingeblasene Luft unterstützt das Aufsteigen nach Art einer Flotation. Es braucht deshalb zur Entfernung des insgesamt freigesetzten Filterschlammes nur eine relativ geringe Menge an Spülflüssigkeit mitabgezogen zu werden, während ein großer Teil der zugeführten Spülflüssigkeit als sauberes Wasser im Filter verbleiben kann.

Gemäß einer bevorzugten Ausführungsform der Erfindung kann vor und/oder während der Luft- und/oder Spülflüssigkeitszufuhr der Flüssigkeitsstand im Filter bis über die Höhe des Ablaufs aufgestaut werden, und es wird dann nur die über die Höhe des Ablaufs anstehende, den flotierten Filterschlamm enthaltende Flüssigkeitsmenge abgezogen. Hierbei kann auch während des Abziehens weitere Spülflüssigkeit noch so lange zugeführt werden, bis am Ablauf im wesentlichen reine Spülflüssigkeit erscheint.

Wenn die Reinigung des Filters Teil einer Gesamtentleerung und -reinigung einer Abscheideranlage (Wasser-Leichtflüssigkeit) ist, in welcher das Filter als Nachreinigungsstufe einem Schwerkraftabscheider nachgeschaltet ist, dann kann erfindungsgemäß die Menge der zuzuführenden bzw. vom Entsorgungsfahrzeug abzutransportierenden Flüssigkeit weiter dadurch gesenkt werden, daß vor dem Rückspülen des Filters das im Schwerkraftabscheider enthaltene, mit noch nicht abgetrennter Leichtflüssigkeit verunreinigte Wasser mit Ausnahme der bereits abgeschiedenen Schwimm- und/oder Sinkstoffschicht abgepumpt und durch das Filter geleitet wird und daß die im Schwerkraftabscheider verbliebene abgeschiedene Schwimm- und/oder Sinkstoffschicht später abgepumpt und abtransportiert wird.

Der durch das Überpumpen des verschmutzten Wassers aus dem Abscheider in das Filter freigewordene Raum im Abscheider kann zur zeitweiligen Aufnahme der beim Rückspülen des Filters aus diesem abgezogeneen, mit Filterschlamm angereicherten Spülflüssigkeit genutzt werden. Hierdurch ergeben sich Vorteile bei der Durchführung des gesamten Reinigungsvorganges, da die Übernahme dieser verschmutzten Spülflüssigkeit in das Entsorgungsfahrzeug erst nach Abschluß des Rückspülvorganges, und zwar zusammen mit der Übernahme der abgeschiedenen Sink- und/oder Schwimmstoffe aus dem Abscheider zu erfolgen braucht.

Man kann auch, um den Filter nicht zu überlasten, so vorgehen, daß man zuerst aus dem Abscheider die oben schwimmende Leichtflüssigkeit in das Entsorgungsfahrzeug saugt und danach erst mit dem Überpumpen des Wassers in den Filter beginnt.

Die Erfindung wird im folgenden anhand eines Ausführungsbeispieles unter Bezugnahme auf die Zeichnungen näher erläutert.

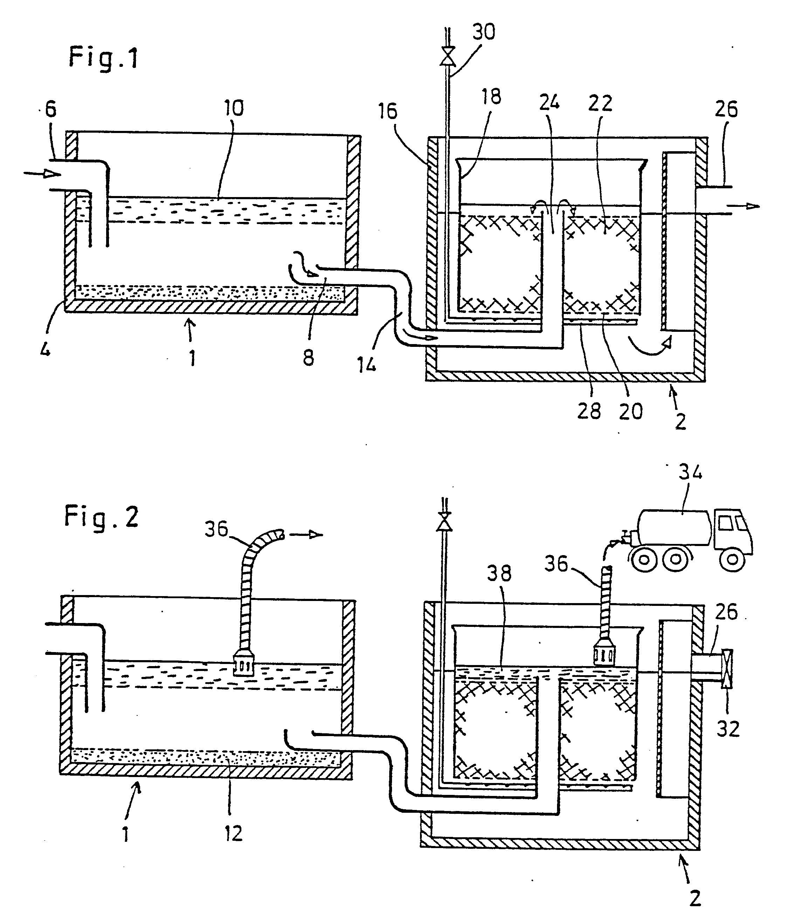

Fig. 1 bis 6 zeigen einen Schnitt durch eine aus Schwerkraftabscheider und nachgeschaltetem Filter bestehende Abscheideranlage in verschiedenen Betriebsphasen des Entleerungs- und Reinigungsvorganges.

Die in Fig. 1 im normalen Betriebszustand dargestellte Abscheideranlage besteht aus dem Abscheider 1 und dem Filter 2. Der Abscheider 1 umfaßt einen Abscheiderbehälter 4 mit einem Zulauf 6 und einem Ablauf 8. Im Betrieb hat das beim Zulauf 6 zugeführte, mit Leichtflüssigkeit und gegebenenfalls anderen Schmutzstoffen verunreinigte Wasser im Abscheiderbehälter 6 eine ausreichend lange Aufenthaltszeit, so daß sich durch Schwerkraftseparation eine schwimmende Schicht 10 aus abgeschiedener Leichtflüssigkeit (Benzin, Öl, od. dgl.) sowie gegebenenfalls eine Bodenschicht 12 aus abgeschiedenen Sinkstoffen bildet. Das beim Ablauf 8 abgezogene, weitgehend von den Verunreinigungen befreite Wasser wird über Verbindungsleitung 14 dem Filter 2 zugeführt. Dieses besteht aus einem Filterbehälter 16, in welchem mit Abstand von der Seitenwand ein Filterkorb 18 mit perforiertem Boden 20 angeordnet ist, der ein Filterbett 22 enthält. Das Filterbett 22 besteht aus einem für organische Leichtflüssigkeit, wie Öl, Benzin, od. dgl. koaleszierend wirkenden Material, das in Form eines offenzelligen geschäumten Kunststoffs, z. B. Polyurethan, vorliegt. Die zu filtrierende Flüssigkeit wird über ein Steigrohr 24 zugeführt, dessen obere Mündung somit die Quelle für das Filter 2 darstellt, aus welcher sich die zu filtrierende Flüssigkeit über die Oberfläche des Filterbettes 22 verbreitet und durch dieses nach unten geleitet wird, wo sie durch den perforierten Boden 20 austritt und außerhalb des Filterkorbes 18 nach oben steigt und über einen Ablauf 26 abgeleitet wird. Der Ablauf 26 bestimmt als Überlaufkante die Höhe des Flüssigkeitsspiegels im Filterbehälter 2 sowie auch die Höhe des Flüssigkeitsspiegels in dem damit kommunizierenden Abscheiderbehälter 1, wobei der Flüssigkeitsspiegel im Abscheider 1 je nach der Dicke der abgeschiedenen schwimmenden Leichtflüssigkeitsschicht 10 etwas höher liegen wird als im Filter 2.

Das Filter 2 ist mit unter dem Boden 20 des Filterkorbes 18 angeordneten perforierten Einblasleitungen 28 versehen, die an eine absperrbare Druckluftzuleitung 30 angeschlossen sind.

Zum Reinigen der Abscheideranlage wird wie folgt vorgegangen. Gemäß Fig. 2 wird der Ablauf 26 durch geeignete Absperrmittel 32 verschlossen. Durch weiter zuströmende oder zugegebene Flüssigkeit beim Zulauf 6 wird der Flüssigkeitsspiegel im Abscheider 1 und dem Filter 2 angehoben. Mittels eines an ein Entsorgungsfahrzeug 34 angeschlossenen Saugschlauches 36 wird die obenauf schwimmende, abgeschiedene Leichtflüssigkeitsschicht 10 aus dem Abscheider 1 und gegebenenfalls eine obenauf schwimmende Leichtflüssigkeitsschicht 38 aus dem Filter 2 abgesaugt.

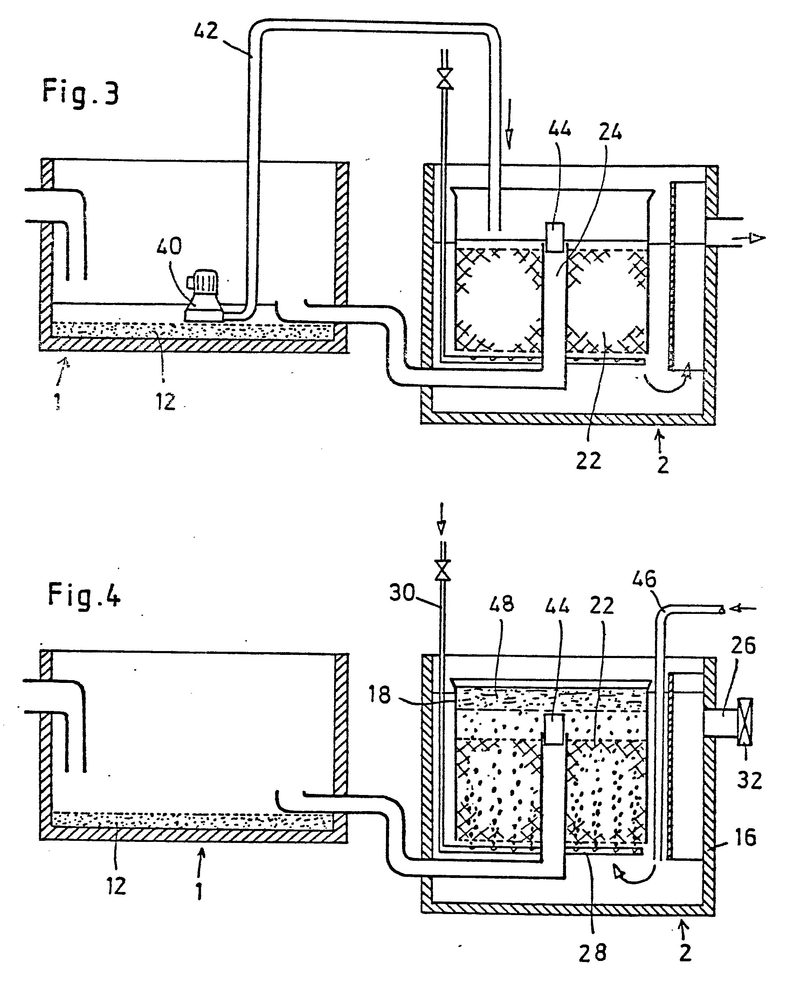

Anschließend wird der Ablauf 26 wieder geöffnet und mittels einer Tauchpumpe 40 und eines Verbindungsschlauches 42 das Wasser aus dem Abscheider 1 in das Filter 2 übergepumpt, und zwar bis zu einem Niveau der gegebenenfalls abgesetzten Bodenschlammschicht 12 (Fig. 3). Das übergepumpte Wasser durchläuft das Filterbett 22 und läuft als gereinigtes Wasser am Ablauf 26 ab. Der Zulauf 6 des Abscheiders 1 ist hierbei selbstverständlich verschlossen. Falls der Ablauf 8 des Abscheiders 1, wie allgemein üblich, einen schwimmergesteuerten Verschluß aufweist, muß dieser entfernt bzw. zwangsweise geöffnet gehalten werden. Die Quelle des Filters 2, d. h. das obere Ende des Steigrohres 24, ist während dieser Phase ebenfalls durch ein geeignetes Verschlußorgan 44 geschlossen, um das Rückströmen des Wassers aus dem Filter 2 in den Abscheider 1 zu verhindern.

Nach Entleerung des Abscheiders 1 bis zur Bodenschlammschicht 12 wird gemäß Fig. 4 der Ablauf 26 des Filters 2 wieder verschlossen, und bei ebenfalls bei 44 verschlossener Quelle des Filters wird Druckluft über die Leitung 30 und die Blasrohre 28 durch das Filterbett 22 geblasen, und anschließend wird über einen Schlauch 46 Spülwasser in den Raum zwischen Filterkorb 18 und Filterbehälter 16 zugeführt, so daß es ebenfalls durch das Filter aufsteigt. Hierdurch erfolgt ein Freisetzen der in den Filtersporen als Schlamm festgesetzten Verunreinigungen, sowie gleichzeitig ein Anstieg des Flüssigkeitsspiegels im Filterbehälter 16.

Durch einen kombinierten Rückspül- und Flotationsprozeß sammelt sich der aus den Filtersporen freigesetzte Filterschlamm als schwimmende Filterschlammschicht 48 oberhalb des Filterbettes 22 an.

Die Zuführung von Druckluft und von Spülflüssigkeit brauchen nicht mit gleicher Zeitdauer zu erfolgen. Beispielsweise kann das Einblasen der Druckluft ca. 5 Minuten dauern, während die Zuführung des Spülwassers beispielsweise 2 Minuten lang mit einer Menge von 1-1,5 Liter pro Sekunde erfolgen kann.

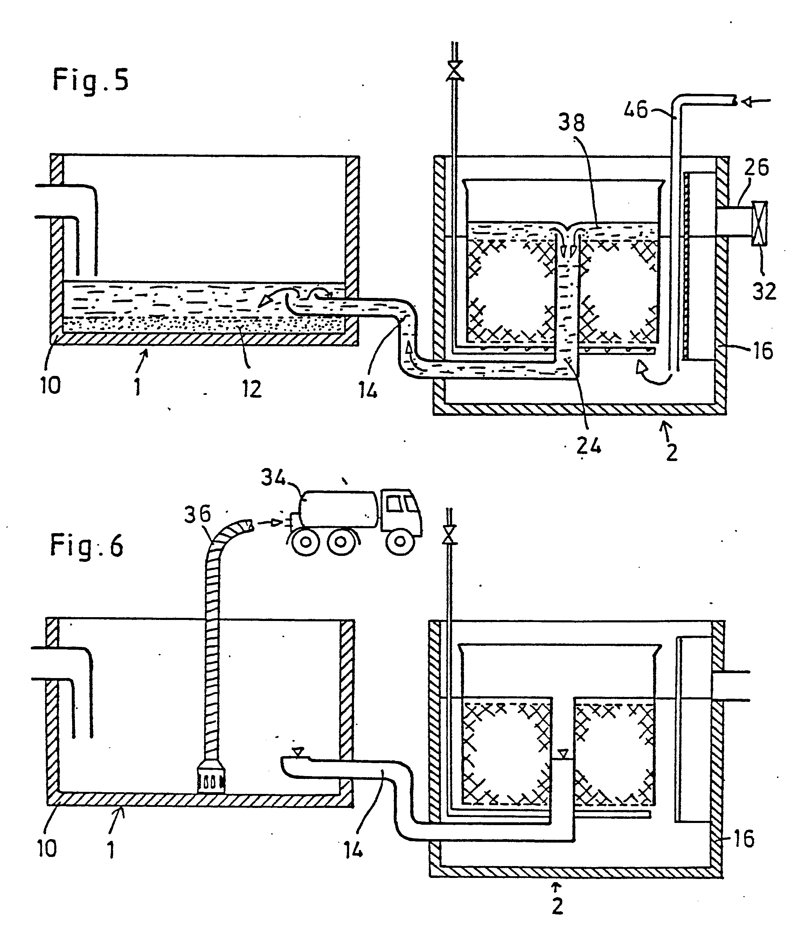

Anschließend wird der Verschluß 44 des Steigrohres 24 geöffnet, so daß die gesamte, oberhalb des Steigrohres 22 anstehende Flüssigkeitsmenge mit der durch Flotation angereicherten Schwimmschlammschicht 38 durch das Steigrohr 24 und das Verbindungsrohr 14 in den Abscheider 1 strömt (Fig. 5). Die Zuführung der Druckluft kann während dieser Zeit noch aufrechterhalten werden oder schon vorher abgesperrt worden sein. Ferner kann während dieser Phase erneut Spülwasser durch den Schlauch 46 so lange zugeführt werden, bis das Filterbett 22 wieder bedeckt ist und reines Spülwasser beginnt, in den Abscheider 1 zu fließen.

Das Rückspülen kann anschließend durch erneutes Zuführen von Druckluft und Spülwasser bei gesperrter Quelle 44 noch ein oder mehrmals wiederholt werden, falls dies zur besonders intensiven Reinigung des Filters erforderlich ist. Nach der gewünschten Anzahl von Rückspülvorgängen wird der Abscheider 1 leergepumpt und sowohl das aus dem Filter 2 in den Abscheider 1 zurückgeströmte verschmutzte Rückspülwasser als auch die Bodenschlammschicht 12 aus dem Abscheider 1 vom Tank des Entsorgungsfahrzeugs 34 aufgenommen. Das Filter 2 ist zu diesem Zeitpunkt bereits wieder mit reinem Spülwasser gefüllt. Falls dem Abscheider 1 ein Schlammfang (nicht dargestellt) vorgeschaltet ist, kann dessen Inhalt gleichzeitig ebenfalls in das Entsorgungsfahrzeug gepumpt werden. Es ist nun nur noch nötig, den Abscheider 1 und gegebenenfalls den Schlammfang wieder mit Wasser zu füllen, den Schwimmerverschluß für den Ablauf 8 des Abscheiders 1 wieder einzusetzen, sowie den Zulauf 6, den Ablauf 26 und das obere Ende des Steigrohres 24 wieder zu öffnen. Die Anlage ist wieder betriebsbereit.

Zwischen zwei Rückspülphasen kann, falls gewünscht, auch eine zusätzliche Reinigung des Filters mit einem Reinigungsmittel (Kaltreiniger) erfolgen. Zu diesem Zweck wird, ausgehend von der in Fig. 5 dargestellten Phase, ein geeignetes Reinigungsmittel, z. B. lösungsmittelfreier, wasserlöslicher Kaltreiniger, auf der Flüssigkeitsoberfläche im Filterkorb 18 gleichmäßig verteilt. Hierdurch wird der ölhaltige Schlamm an der Oberfläche des Filterbettes 22 gelöst. Zusätzlich wird über den Schlauch 46 das Wasser aus dem Zwischenraum zwischen dem Filterkorb 18 und dem Filterbehälter 16 abgepumpt und dadurch der Wasserspiegel im Filter 2 um etwa die Hälfte der Höhe des Filterbettes abgesenkt. Dadurch dringt der auf die Oberfläche aufgegebene Kaltreiniger auch in tiefere Schichten des Filterbettes 22 ein. Man läßt das Reinigungsmittel eine geeignete Zeit einwirken und führt dann wiederum Spülwasser über den Schlauch 46 in den Raum zwischen Filterkorb 18 und Filterbehälter 16 zu, so daß der Wasserspiegel wieder steigt, bis das Filterbett 22 wieder mit Wasser bedeckt ist. Durch erneutes Einblasen von Druckluft und gegebenenfalls weitere Zufuhr von Spülflüssigkeit wird ein erneuter Rückspülvorgang durchgeführt, das dabei freigesetzte Schlammwasser fließt über das Fallrohr 24 in den Abscheider 1.

Das in Fig. 5 dargestellte Überlaufen des aufgestauten und flotierten Filterschlamms in den Abscheider 1 ist nur dann möglich, wenn Abscheider 1 und Filter 2 unmittelbar miteinander kommunizieren. In manchen Fällen ist zwischen Abscheider 1 und Filter 2 ein Überlaufwehr od. dgl. angeordnet. In diesem Fall wird der flotierte Filterschlamm unmittelbar aus dem Steigrohr 24 des Filters 5 abgepumpt, und zwar entweder direkt in das Entsorgungsfahrzeug oder zur Zwischenspeicherung in den Abscheider 1.

## Patentansprüche

1. Verfahren zum Reinigen eines Filters durch Rückspülen seiner Filterfüllung von unten nach oben mittels Spülflüssigkeit und Luft und anschließendes Abziehen der Spülflüssigkeit oberhalb der Filterfüllung, wobei zuerst während des Rückspülens ohne Abzug von Spülflüssigkeit die Zufuhr von Luft in einer Menge, die zur Erzeugung einer Turbulenz im Filter und zur Ablösung der angelagerten Schmutzteilchen führt, und die Zufuhr von Spülflüssigkeit in einer den beim Filtrationsbetrieb zugeführten Volumenstrom unterschreitenden Menge derart erfolgt, daß der freigesetzte Filterschlamm in eine über der Filterfüllung anstehende Schicht von Spülflüssigkeit ausgetragen wird, und wobei anschließend die oberhalb der Filterfüllung anstehende, den Filterschlamm enthaltende Flüssigkeitsschicht abgezogen wird, dadurch gekennzeichnet, daß beim Rückspülen eines Koaleszenzfilters mit einer Filterfüllung aus offenzelligem geschäumten Kunststoff die Luft und Spülflüssigkeit derart ungleichzeitig zugeführt werden, daß zuerst nur Luft zur Freisetzung der Schmutzteilchen in den Poren der Filterfüllung und anschliessend die Spülflüssigkeit mit oder ohne weitere Luftzufuhr, zum langsamen Austragen des Filterschlamms an die Flüssigkeitsoberfläche zugeführt wird.

2. Verfahren nach Anspruch 1, wobei die Reinigung des Filters im Rahmen einer Gesamtentleerung und — reinigung einer Abscheideranlage (Wasser-Leichtflüssigkeit), in welcher das Filter als Nachreinigungsstufe einem Schwerkraftabscheider nachgeschaltet ist, durchgeführt wird, dadurch gekennzeichnet, daß vor dem Rückspülen des Filters das im Schwerkraftabscheider enthaltene, mit noch nicht abgetrennter Leichtflüssigkeit verunreinigte Wasser, mit Ausnahme der bereits abgeschiedenen Schwimm- und/oder Sinkstoffschicht, abgepumpt und durch das Filter geleitet wird, und daß die beim Rückspülen aus dem Filter abgezogene, mit Filterschlamm geladene Spülflüssigkeit in den Schwerkraftabscheider geleitet und dort zwischengespeichert und anschließend, gegebenenfalls zusammen mit den im Abscheider verbliebenen abgeschiedenen Schwimm- und/oder Sinkstoffen, abgezogen und aus der Anlage entfernt wird.

## Claims

1. Method of cleaning a filter by back flushing its filter packing from the bottom upwards by means of flushing liquid and air and subsequent drawing off of the flushing liquid above the filter packing, wherein initially during the back flushing, without drawing off flushing liquid, the supply of air is effected in a quantity which causes turbulence to be generated in the filter and the accumulated dirt particles to be detached, and flushing liquid is supplied in a quantity smaller than the volume stream fed during filtration operation, so that the released filter sludge is discharged into a layer of flushing liquid present above the filter packing, and wherein the layer of liquid present above the filter packing and containing the filter sludge is subsequently drawn off, characterised in that, when back flushing a coalescence filter having a filter packing of open-cell foam plastic, the air and flushing liquid are supplied asimultaneously, such that initially only air is supplied to release the dirt particles in the pores of the filter packing, and then the flushing liquid is supplied with or without further air supply, for the slow discharge of the filter sludge to the surface of the liquid.

2. Method according to Claim 1, wherein cleaning of the filter is performed within the scope of total emptying and total cleaning of a separator installation (water-light liquid) in which the filter is arranged as final purification stage following a gravity separator, characterised in that before the back flushing of the filter, the water contained in the gravity separator, which is contaminated by light liquid not yet separated off, is pumped off with the exception of the layer of floating matter and/or sediment already separated, and passed through the filter, and that the flushing liquid charged with filter sludge and drawn out of the filter during back flushing is passed into the gravity separator and stored temporarily there, and is then drawn off, optionally conjointly with the separated floating matter and/or sediments which remain in the separator, and removed from the installation.

## Revendications

1. Procédé pour nettoyer un filtre par lavage à contre-courant de sa couche filtrante, du bas en haut, à l'aide d'un fluide de lavage et d'air, et par soutirage subséquent du fluide de lavage au-dessus de la couche filtrante, opération qui consiste au début, lors du lavage à contre-courant et sans soutirage de fluide de lavage, à introduire une quantité d'air suffisante pour produire une turbulence dans le filtre et pour assurer le détachement des particules d'impuretés déposées, ainsi qu'à introduire une quantité de fluide de lavage inférieure au courant volumique amené en régime de filtrage, de façon à ce que les boues de filtration dégagées se déversent dans une couche de fluide de lavage se trouvant au-dessus de la couche filtrante, sur quoi la couche de fluide se trouvant au-dessus de l'élément filtrant et contenant les boues de filtration est soutirée, procédé caractérisé en ce que, lors du lavage par contre-courant d'un filtre de coalescence dont la couche filtrante est constituée par une matière plastique moussée à alvéoles ouvertes, l'air et le fluide de lavage ne sont pas introduits simultanément, de façon à ce qu'au début, il ne soit introduit que de l'air destiné à détacher les particules d'impuretés dans les pores de la couche filtrante, et qu'ensuite, le fluide de lavage destiné à faire déverser lentement les boues de filtration à la surface du fluide, soit amené avec ou sans introduction d'air supplémentaire.

2. Procédé selon la revendication 1, lors duquel le nettoyage du filtre est réalisé dans le cadre d'un déchargement et nettoyage général d'une installation de séparation (eau — liquide léger), dans laquelle le filtre est monté derrière un séparateur par gravité en tant qu'étage d'épuration ultérieure, caractérisé en ce qu'avant le lavage par contre-courant du filtre, l'eau contenue dans le séparateur par gravité et polluée par du liquide léger pas encore séparé, est évacuée par pompe, à l'exception de la couche déjà séparée de matières surnageantes et/ou de matières en suspension sédimentables, et est faite s'écouler au travers du filtre, et en ce que le fluide de lavage soutiré du filtre lors du lavage par contre-courant et chargé de boues de filtration, est amené dans le séparateur par gravité, y est entreposé et ensuite soutiré, le cas échéant avec les matières surnageantes et/ou les matières en suspension sédimentables restées dans le séparateur, et est enfin évacuée de l'installation.

Fig.1

Fig.2

Fig.3

Fig.4

**Fig. 5**

**Fig. 6**